# EUROPÄISCHE PATENTSCHRIFT

(11) **EP 0 894 879 B1**
(45) Veröffentlichungstag und Bekanntmachung des Hinweises auf die Patenterteilung: **26.02.2003**
(21) Anmeldenummer: 98111923.3
(22) Anmeldetag: 27.06.1998
(51) Int. Cl.: D03C 7/04, H02K 7/08, H02K 7/14, H02K 11/00

(54) **Rotations-Kantendreher mit direkt elektromagnetischem Antrieb für Webmaschinen**
Rotary leno selvedge mechanism with direct electromagnetical drive for looms
Mécanisme rotatif pour lisières pas de gaze à entraînement électromagnétique direct pour métiers à tisser

(30) Priorität: 01.08.1997 DE 19733261
(43) Veröffentlichungstag der Anmeldung: 03.02.1999
(73) Patentinhaber: LINDAUER DORNIER GESELLSCHAFT M.B.H, 88129 Lindau (DE)
(72) Erfinder: Häussler, Horst, 88131 Lindau (DE); Holz, Hans-Joachim, 88131 Lindau (DE); Krumm, Valentin, 88138 Hergensweiler (DE)

(56) Entgegenhaltungen:
- EP-A- 0 402 240
- DE-C- 4 405 776
- US-A- 4 720 650
- US-A- 4 853 567
- PATENT ABSTRACTS OF JAPAN vol. 016, no. 067 (E-1168), 19. Februar 1992 -& JP 03 261358 A (SUMITOMO HEAVY IND LTD), 21. November 1991

## Beschreibung

Die Erfindung betrifft einen Rotations-Kantendreher mit direkt elektromagnetischem Antrieb für Webmaschinen, mittels welchem durch Volldreherbindungen die Schußfäden an den Geweberändem eines Gewebes abgebunden werden und eine dauerhafte Gewebekante hoher Qualität herstellbar ist.

Bekannt ist aus der DE 44 05 776 C1 ein Rotations-Kantendreher für eine Webmaschine mit einer drehangetriebenen Dreherscheibe, die zwei symmetrisch um die Mittenachse der Dreherscheibe angeordnete Fadenführungen aufweist, wobei durch jede Fadenführung ein von einer ersten und einer zweiten Dreherspule gelieferter Dreherfaden führbar ist.
Im Hinblick auf die Anordnung des Rotations-Kantendrehers wird in der vorgenannten DE-PS als vorteilhaft erwähnt, wenn die Drehachse der Dreherscheibe parallel zur Schußfadeneintragsrichtung liegt und der Abstand der Dreherscheibe vom Bindepunkt des Gewebes auf ein notwendiges Minimum festlegbar ist.
In dem bekannten Rotations-Kantendreher bildet die Dreherscheibe den Läufer (Rotor) eines elektrisch ansteuerbaren Stellmotors.
Bei dem Stellmotor handelt es sich um einen Motor bekannten Wirkprinzips mit radialem Magnetfluß, wobei der Stator die Wicklungen trägt und der Rotor auf dem Außenumfang teilkreisartig angeordnete Magnete aufnimmt.
Der Stator des Stellmotors ist in einem gehäuseähnlichen Trägerteil aufgenommen, das einen Halter zur Verbindung mit der Webmaschine ausbildet.

Die DE 44 05 776 C1 enthält keine Angaben über die Art der Lagerung der Dreherscheibe und über deren Lageerfassung, insbesondere nicht für den Einsatzfall, daß der Rotations-Kantendreher mit Drehrichtungsumkehr der Dreherscheibe betrieben wird.

Aufgabe der Erfindung ist es daher, in einem Rotations-Kantendreher schmaler Bauart, in dem die die Dreherfäden führende Dreherscheibe der Rotor des elektromagnetischen Antriebs ist, eine konstruktiv einfache Lagerung der Dreherscheibe vorzusehen und Mittel anzugeben, die eine absolute Messung des Drehwinkels zum Zwecke der Erfassung einer definierten Winkellage der Dreherscheibe erlauben und wobei der Antrieb und das Messsystem von Verunreinigungen weitgehend abgeschirmt sind.

Die Aufgabe wird erfindungsgemäß durch die Merkmale des Patentanspruchs 1 gelöst.

Danach ist erfindungswesentlich, daß in einem Rotations-Kantendreher mit direkt elektromagnetischem Antrieb, in dem die Dreherscheibe der Rotor des Antriebes ist, die Dreherscheibe an einer radial oberhalb der Fadenführungen gelegenen und umlaufenden Kreisfläche drehfest mit einer Kreisfläche des Außenringes wenigstens eines Wälzlagers verbunden ist, und daß wenigstens eine koaxial um die Mittenachse des Rotors angeordnete Zentrierung vorgesehen ist, in der der Innenring des Wälzlagers drehfest aufgenommen ist.
Die Zentrierung kann dabei ein mit der den Stator tragenden Gehäusewand verbundener Zentrierring oder eine in die Gehäuswand eingearbeitete Aufnahme sein.
Damit bildet die Dreherscheibe mit ihren Fadenführungen und der Außenring des Wälzlagers eine um die Mittenachse der Dreherscheibe bzw. des Rotations-Kantendrehers rotierbare strukturelle Einheit, also den Rotor, der auf seinem Außenumfang teilkreisartig angeordnete Permanentmagnete trägt, die die Pole zu den Statorwicklungen bilden. Vorzugsweise besteht jeder einzelne Pol aus wenigstens zwei Permanentmagneten.

Eine andere Möglichkeit der Dreherscheiben- bzw. Rotorlagerung wird erfindungsgemäß dadurch erreicht, daß die Dreherscheibe auf einer radial oberhalb der Fadenführungen gelegenen Kreisfläche einerseits mit dem Außenring eines ersten und andererseits mit dem Außenring eines zweiten Wälzlagers drehfest verbunden ist, wobei die Wälzlager achsparallel zueinander angeordnet sind.
Die beiden Außenringe und die Dreherscheibe bilden dabei eine um die Mittenachse der Dreherscheibe bzw. des Rotations-Kantendrehers rotierbare strukturelle Einheit, also den Rotor, der auf seinem Außenumfang teilkreisartig angeordnete Permanentmagnete trägt, die die Pole zu den Statorwicklungen bilden.

Der Innenring des ersten und zweiten Wälzlagers ist drehfest in jeweils einer koaxial um die Mittenachse des Rotors angeordneten und in der jeweiligen Außenwand des Stators vorhandenen Zentrierung aufgenommen. Zwischen dem jeweiligen Innenring des Wälzlagers und der Dreherscheibe muß ein ausreichendes Spiel vorhanden sein. Wenigstens eine Außenwand des Stators des betreffenden Rotations-Kantendrehers weist Vorkehrungen zur Verbindung mit einer Webmaschine auf.

Zur Erfassung der Lage des Rotors besitzt der Rotations-Kantendreher mit direkt elektromagnetischem Antrieb ein Drehwinkelerfassungs- oder ein Wegmesssystem, damit zum einen der Rotor direkt nach dem Einschalten der Webmaschine eine definierte Winkellage einnehnmen kann und damit zum anderen die Dreherfachbildung des Rotations-Kantendrehers synchron zur Webfachbildung der Fachbildeeinrichtung der Webmaschine gesteuert werden kann.
Auf den Aufbau und die Funktionsweise des Messsystems soll hier nicht näher eingegangen werden, weil dies nicht unmittelbarer Gegenstand der Erfindung ist.

Die Erfindung wird nachstehend anhand eines Ausführungsbeispiels näher beschrieben.

Es zeigen:
- Figur 1: einen Rotations-Kantendreher gemäß der Ansicht B in Figur 2,
- Figur 2: die Lagerung der Dreherscheibe eines Rotations-Kantendrehers im Schnitt gemäß der Linie A-A in Figur 1,
- Figur 3: eine Ausführungsvariante der Lagerung der Dreherscheibe gemäß Figur 2.

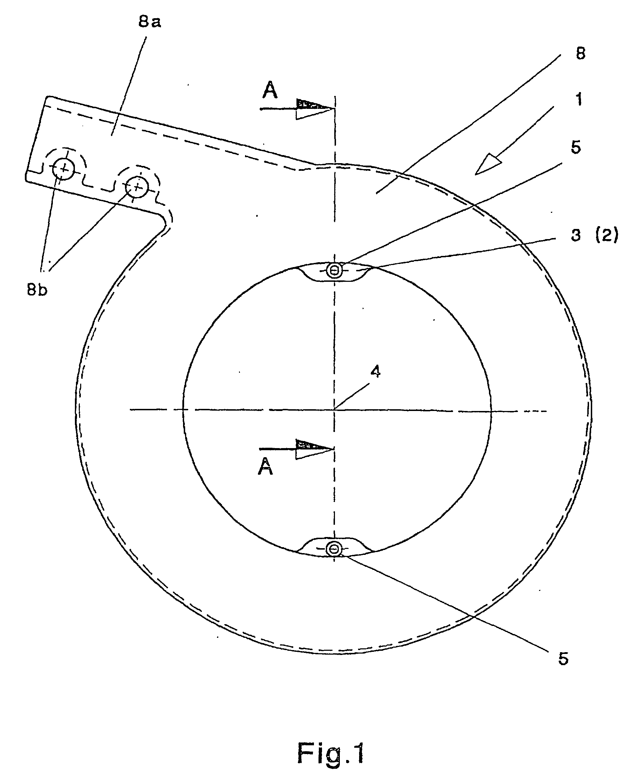

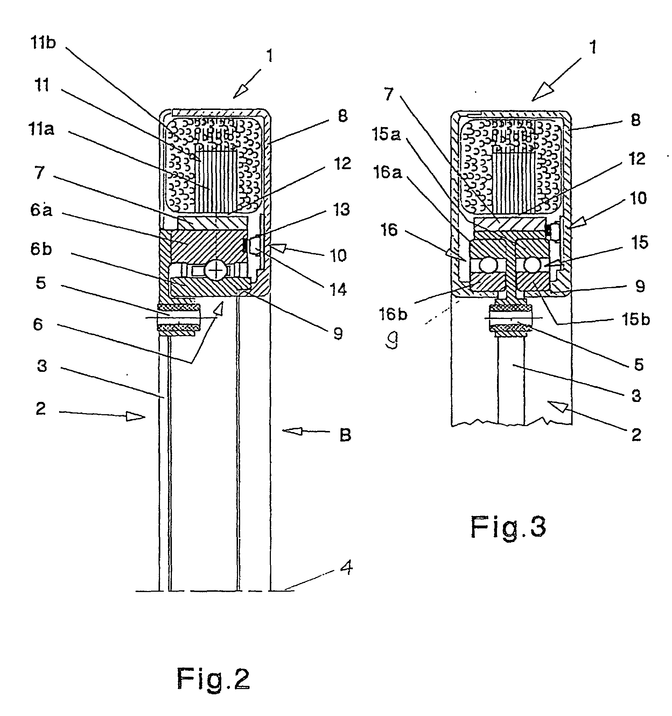

Die in Figur 1 dargestellte Ansicht B gemäß Figur 2 zeigt schematisch das Statorgehäuse 8 des Rotations-Kantendrehers 1 mit einem vom Gehäuse 8 weggerichteten Ansatz 8a zur maschinenfesten Verbindung mit der nicht dargestellten Webmaschine.
Über die in dem Ansatz 8a vorhandenen Durchgangsbohrungen 8b wird die Verbindung mittels nicht dargestellter Schrauben hergestellt.
In Figur 1 ist des weiteren die als Ring ausgebildete Dreherscheibe 3 mit den Fadenführungen 5 erkennbar. Die Dreherscheibe 3 ist um die Mittenachse 4 des Rotations-Kantendrehers 1 rotierbar angeordnet.

Figur 2 und 3 zeigen eine Schnittdarstellung gemäß der Linie A-A in Figur 1.
Die Figuren 2 und 3 sind in einem größeren Maßstab als die Figur 1 gezeichnet.
Das Gehäuse 8, das als rotationssymmetrisches Bauteil hergestellt ist, nimmt den Stator 11, bestehend aus den Statorblechen 11a und den Wicklungen 11b, und den Innenring 6b des Wälzlagers 6 stationär auf.
Die Art der Verbindung ist in beiden Fällen dem Fachmann überlassen.

Wichtig ist, daß der Innenring 6b des Wälzlagers 6 drehfest mit dem Gehäuse 8 über eine beliebig ausgebildete Zentrierung 9 in Verbindung steht.
Am Außenring 6a des Wälzlagers 6 ist die Dreherscheibe 3 mit den Fadenführungen 5 fest verbunden. Dabei bilden der Außenumfang der Dreherscheibe 3 und der Außenumfang des Außenringes 6a vom Wälzlager 6 einen gemeinsamen Außenumfang aus, auf dem einzelne Permanentmagnete 7 oder Gruppen von einzelnen Permanentmagneten 7 teilkreisartig angeordnet sind, die zwischen sich und dem Stator 8 einen zylinderähnlichen Luftspalt 12 bilden.
Die Permanentmagnete 7, der Außenring 6a des Wälzlagers 6 und die Dreherscheibe 3 mit den Fadenführungen 5 bilden eine um die Mittenachse 4 des Rotations-Kantendrehers 1 rotierbare strukturelle Einheit, die der Rotor 2 des elektromagnetischen Antriebes ist.

Zur Lageerfassung und zur Steuerung, insbesondere zur Steuerung der Drehrichtungsumkehr, ist dem Rotor 2 ein absolut arbeitendes Drehwinkelmess- oder ein Wegmesssystem 10 zugeordnet. Das ist erforderlich, da der Rotor 2 bzw. die Dreherscheibe 3 direkt nach dem Einschalten der Webmaschine eine definierte Winkellage einnehmen muß.

Das Messsystem 10, bestehend aus Signalgebern 13 und Signalaufnehmern 14, ist schematisch in den Figuren 2 und 3 dargestellt.

Figur 3 zeigt eine modifizierte Lagerung für die Dreherscheibe 3. Hier ist, anstelle der in Figur 2 gezeigten Lagerung, die Dreherscheibe 3 zentrisch zwischen einem ersten Wälzlager 15, mit Außenring 15a und Innenring 15b und einem zweiten Wälzlager 16, mit Außenring 16a und Innenring 16b, angeordnet und mit dem jeweiligen Außenring der Wälzlager 15,16 drehfest verbunden.
Die betreffenden Innenringe 15b und 16b sind drehfest in dem jeweils hälftigen Gehäuse 8 aufgenommen.
Der Rotor 2 des elektromagnetischen Antriebs besteht somit aus der Dreherscheibe 3, den Außenringen 15a, 16a und aus der Vielzahl der auf dem Außenumfang der Dreherscheibe 3 angeordneten Permanentmagnete 7.
Der Rotations-Kantendreher 1 gemäß Figur 3 ist ebenfalls mit einem Drehwinkelmessoder einem Wegmesssystem 10 ausgerüstet, wie es in Figur 2 schematisch dargestellt ist.

Mit der erfindungsgemäßen Lösung wird eine günstige Abmessung und eine konstruktiv einfache und kostengünstige Lagerung der Dreherscheibe in einem Rotations-Kantendreher mit direkt elektromagnetischem Antrieb erreicht.
Ferner ist die Gefahr, daß der Antrieb durch Faserflug verschmutzt wird, äußerst gering, da dieser von dem Gehäuse vollständig umschlossen ist.
Des weiteren ist von Vorteil, daß die Rotations-Kantendreher gemäß der Ausführungen nach den Figuren 2 und 3 sowohl für eine Drehertechnologie mit umsteuerbarer Drehrichtung als auch für eine Technologie ohne umsteuerbare Drehrichtung der Dreherscheibe verwendet werden können.
Gemäß Figur 3 ist ferner von Vorteil, daß eine bessere Kraftverteilung bei auftretenden Radialkräften gegeben ist.

### ZEICHNUNGS-LEGENDE

- 01: Rotations-Kantendreher
- 02: Rotor
- 03: Dreherscheibe
- 04: Mittenachse
- 05: Führung
- 06: Wälzlager
- 06a: Außenring
- 06b: Innenring
- 07: Permanentmagnet
- 08: Gehäuse
- 08a: Ansatz
- 08b: Bohrung
- 09: Zentrierung
- 10: Messsystem
- 11: Stator
- 11a: Statorbleche
- 11b: Statorbewicklung
- 12: Luftspalt
- 13: Signalgeber
- 14: Signalaufnehmer
- 15: Wälzlager
- 15a: Außenring
- 15b: Innenring
- 16: Wälzlager
- 16a: Außenring
- 16b: Innenring

## Patentansprüche

1. Rotations-Kantendreher (1) mit direkt elektromagnetischem Antrieb für Webmaschinen, mit einer drehend gelagerten Dreherscheibe (3), die zwei symmetrisch um ihre Mittenachse (4) angeordnete Fadenführungen (5) aufweist und durch jede Fadenführung ein von einer ersten und einer zweiten Dreherspule gelieferter Dreherfaden führbar ist, wobei die Dreherscheibe (3) den Rotor (2) des elektromagnetischen Antriebs mit radialem Magnetfluss zwischen Rotor (2) und Stator (11) bildet, wobei die Dreherscheibe (3) eine Vielzahl von auf ihrem Außenumfang beabstandet voneinander angeordnete Permanentmagnete (7) besitzt und der Stator (11) in einem mit der Webmaschine verbindbaren Gehäuse (8) aufgenommen ist, **gekennzeichnet des weiteren durch:**
a) den Außenring (6a) wenigstens eines Wälzlagers (6), der zusammen mit der Dreherscheibe (3) in drehfester Verbindung den Rotor (2) bildet,
b) wenigstens eine koaxial um die Mittenachse (4) des Rotations-Kantendrehers (1) angeordnete und den Innenring (6b) des wenigstens einen Wälzlagers (6) tragende Zentrierung (9) in dem Gehäuse (8) und
c) einen Signalgeber (13) eines absoluten Winkelmess- oder Wegmesssystems (10) zur Messung der Drehwinkellage des Rotors (2).

2. Rotations-Kantendreher nach Anspruch 1, **dadurch gekennzeichnet, dass** die Dreherscheibe (3) zusammen mit dem Außenring (6a) des Wälzlagers (6) einen L-förmigen Querschnitt aufweisenden Ring ausbildet und mit dem Ring fest verbunden ist.

3. Rotations-Kantendreher nach Anspruch 1, **dadurch gekennzeichnet, dass** die Dreherscheibe (3) zusammen mit den Außenringen (15a,16a) eines ersten und eines zweiten Wälzagers (15,16) einen T-formigen Querschnitt aufweisenden Ring ausbildet und mit diesem Ring fest verbunden ist.

4. Rotations-Kantendreher nach Anspruch 1, **dadurch gekennzeichnet, dass** der Innenring (6b) des Wälzlagers (6) drehfest mit der Zentrierung (9) verbunden ist.

5. Rotations-Kantendreher nach den Ansprüchen 1 bis 3, **dadurch gekennzeichnet, dass** die Innenringe (15b,16b) der Wälzlager (15,16) drehfest mit jeweils einer im Gehäuse diametral gegenüberliegenden Zentrierung (9) verbunden sind

6. Rotations-Kantendreher nach Anspruch 1, **dadurch gekennzeichnet, dass** das Drehwinkelmess- oder Wegmesssystem (10) ein absolut inkrementales Messsystem ist.

7. Rotations-Kantendreher nach einem der Ansprüche 1 bis 6, **dadurch gekennzeichnet, dass** zur Wegmessung des Rotors (2) wenigstens ein Signalgeber (13) an dem Rotor (2) angeordnet ist und dass mehrere Signalaufnehmer (14) gehäusefest im Rotationsbereich des wenigstens einen Signalgebers (13) angeordnet sind.

## Claims

1. Rotary leno selvedge mechanism, having a direct electromagnetic drive for looms, having a rotatably mounted leno disc (3) that comprises two thread guides (5) arranged symmetrically about its centre line, a leno thread supplied from a first and a second leno bobbin being guided through each thread guide, wherein the leno disc (3) forms the rotor (2) of the electromagnetic drive with a radial magnetic flux between rotor (2) and stator (11), wherein the leno disc (3) has a plurality of permanent magnets (7) arranged spaced apart from one another around its outer circumference and the stator (11) is received in a housing (8) connectable to the loom, characterised furthermore by:
a) the outer ring (6a) of at least one rolling bearing (6), which together, and in non-rotatable connection, with the leno disc (3) forms the rotor (2),
b) at least one centring means (9) in the housing (8), which centring means is arranged coaxially around the centre line (4) of the rotary leno selvedge mechanism (1) and carries the inner ring (6b) of the at least one rolling bearing (6), and
c) a signal generator (13) of an absolute angle measuring or displacement measuring system (10) for measuring the rotated angular position of the rotor (2).

2. Rotary leno selvedge mechanism according to claim 1, **characterised in that** the leno disc (3), together with the outer ring (6a) of the rolling bearing (6), forms a ring having an L-shaped cross-section and is fixedly connected to the ring.

3. Rotary leno selvedge mechanism according to claim 1, **characterised in that** the leno disc (3), together with the outer rings (15a, 16a) of a first and a second rolling bearing (15, 16) forms a ring having a T-shaped cross-section and is fixedly connected to that ring.

4. Rotary leno selvedge mechanism according to claim 1, **characterised in that** the inner ring (6b) of the rolling bearing (6) is non-rotatably connected to the centring means (9).

5. Rotary leno selvedge mechanism according to claims 1 to 3, **characterised in that** the inner rings (15b, 16b) of the rolling bearings (15, 16) are each non-rotatably connected to a centring means (9) lying diametrically opposite in the housing.

6. Rotary leno selvedge mechanism according to claim 1, **characterised in that** the angle of rotation measuring or displacement measuring system (10) is an absolutely incremental measuring system.

7. Rotary leno selvedge mechanism according to any one of claims 1 to 6, **characterised in that**, for measuring the displacement of the rotor (2), at least one signal generator (13) is arranged at the rotor (2) and several signal receivers (14) are built into the housing in the rotation range of the at least one signal generator (13).

## Revendications

1. Retourneur de lisières rotatif (1) à entraînement électromagnétique direct pour métiers à tisser avec un disque de retourneur (3) logé de manière tournante, qui comprend deux guide-fils (5) disposés en symétrie autour de son axe médian (4), avec lequel un fil de tour fourni par une première et par une deuxième bobine de retourneur peut être guidé à travers chaque guide-fils, le disque de retourneur (3) formant le rotor (2) de l'entraînement électromagnétique à flux magnétique radial entre le rotor (2) et le stator (11), le disque de retourneur (3) comprenant une pluralité d'aimants permanents (7) disposés sur son pourtour extérieur avec un espacement entre eux et le stator étant logé dans un carter pouvant être relié au métier à tisser, **caractérisé par** ailleurs :
a) par la bague extérieure (6a) d'au moins un roulement (6) qui, en liaison en solidarité de rotation avec le disque de retourneur (3), forme le rotor (2),
b) par au moins un centrage (9) dans le carter (8) disposé en position coaxiale autour de l'axe médian (4) du retourneur de lisière rotatif (1) et portant la bague intérieure (6b) d'au moins un roulement (6) et
c) par un transmetteur de signaux (13) d'un système de mesure d'angles ou de trajet (10) absolu servant à la mesure de la position de rotation angulaire du rotor (2).

2. Retourneur de lisières rotatif selon la revendication 1, **caractérisé en ce que** le disque de retourneur (3) forme avec la bague extérieure (6a) du roulement (6) une bague avec une section en forme de L et est relié de manière fixe avec la bague.

3. Retourneur de lisières rotatif selon la revendication 1, **caractérisé en ce que** le disque de retourneur (3) forme avec les bagues extérieures (15a, 16a) d'un premier et d'un deuxième roulement (15, 16) une bague avec une section en forme de T et est relié de manière fixe avec cette bague.

4. Retourneur de lisières rotatif selon la revendication 1, **caractérisé en ce que** la bague intérieure (6b) du roulement (6) est reliée en solidarité de rotation avec le centrage (9).

5. Retourneur de lisières rotatif selon les revendications 1 à 3, **caractérisé en ce que** les bagues intérieures (15b, 16b) des roulements (15, 16) sont reliées en solidarité de rotation avec respectivement un centrage (9) situé en position diamétralement opposée dans le carter.

6. Retourneur de lisières rotatif selon la revendication 1, **caractérisé en ce que** le système de mesure d'angles de rotation ou le système de mesure de trajet (10) est un système de mesure incrémentiel absolu.

7. Retourneur de lisières rotatif selon l'une des revendications 1 à 6, **caractérisé en ce que** pour la mesure du trajet du rotor (2) au moins un transmetteur de signaux (13) est disposé sur le rotor (2) et **en ce que** plusieurs récepteurs de signaux (14) sont disposés à poste fixe sur le carter dans la zone de rotation d'au moins un transmetteur de signaux (13).
